# FASCICULE DE BREVET EUROPEEN

(11) **EP 0 863 398 B1**
(45) Date de publication et mention de la délivrance du brevet: **14.10.2009**
(21) Numéro de dépôt: 98400432.5
(22) Date de dépôt: 23.02.1998
(51) Int. Cl.: G01N 27/04, F01N 9/00, F01N 3/02

(54) **Dispositif destiné à détecter l'encrassement et à chauffer localement un milieu isolant**
Vorrichtung zum Nachweis der Verschmutzung einer isolierenden Umgebung, und zur lokalen Heizung dergleichen
Apparatus for detecting the fouling of an isolating environment, and for local heating thereof

(30) Priorité: 07.03.1997 FR 9702823
(43) Date de publication de la demande: 09.09.1998
(73) Titulaire: Institut Français du Pétrole, 92852 Rueil-Malmaison Cedex (FR)
(72) Inventeur: Dementhon, Jean-Baptiste, 75011 Paris (FR); Martin, Brigitte, 69230 Saint Genis Laval (FR)

(56) Documents cités:
- EP-A- 0 525 566
- EP-A- 0 682 174
- WO-A-93/08382
- US-A- 4 829 766

## Description

La présente invention concerne le domaine de la mesure et de la gestion de l'encrassement local d'un milieu isolant et notamment d'un milieu filtrant isolant.

L'encrassement considéré sera par exemple constitué d'un dépôt de suie ou de particules présentant une conductivité électrique.

La présente invention concerne aussi la mesure du taux de particules contenues dans un gaz via la mesure de l'encrassement d'un milieu isolant "témoin" placé dans le courant gazeux.

Il s'agit aussi selon l'invention de pouvoir mesurer l'encrassement de milieux isolants qui se recouvrent progressivement d'un dépôt conducteur et de déclencher un processus de "nettoyage".

Parmi les modes de réalisation préférés de l'invention, on peut citer un capteur d'encrassement chauffant capable de régénérer un filtre à particules placé dans la ligne d'échappement d'un moteur à combustion interne et plus particulièrement d'un moteur diesel.

Les moteurs diesel générant en effet des taux de particules particulièrement élevés, il peut être envisagé d'équiper les lignes d'échappement de moyens de filtration de particules. Ces moyens retiennent les particules avec des efficacités de filtration importantes, de l'ordre de 80%. A titre illustratif, peuvent être cités le monolithe céramique commercialisé par la Société Corning, ou encore la cartouche à fibres céramique enroulées telle que décrite dans la demande de brevet WO-95/27843.

La difficulté technique rencontrée pour le développement des filtres à particules est qu'ils doivent être périodiquement régénérés, par combustion du dépôt de suie. Cette combustion se produit parfois naturellement, lorsque la température des gaz atteint d'elle-même le niveau requis pour initier l'oxydation des particules. Cependant, les conditions de fonctionnement moyennes aboutissent généralement à des températures trop faibles pour initier spontanément la combustion des particules. Ceci conduit alors à un colmatage du filtre, ce qui est pénalisant pour le bon rendement du moteur, et menace à terme son fonctionnement. Il est alors nécessaire d'assurer artificiellement la régénération du filtre.

De nombreuses techniques ont été développées dans ce sens. Elles peuvent être basées sur des modifications du fonctionnement moteur : vannage à l'admission, vannage à l'échappement, retard de l'avance à l'injection, ou encore liées à un apport d'énergie dans les gaz d'échappement ou au niveau du filtre (résistance électrique, brûleur, micro-ondes...). Il est alors nécessaire de piloter ces différents dispositifs par une commande extérieure prise en charge par un calculateur. Le plus souvent, le critère retenu pour le déclenchement de la régénération est la contre-pression dans la ligne d'échappement.

Pour faciliter la régénération des filtres à particules, une approche différente, de nature chimique consiste à ajouter au carburant un additif par exemple organométallique, qui se retrouve dans le dépôt de suies ce qui conduit généralement à une baisse de la température d'allumage et donc à une augmentation de la fréquence de régénération.

Parmi les produits le plus fréquemment utilisé comme additifs, on peut citer le cuivre, le fer, le cérium, le sodium... . Des études montrent qu'en présence de tels additifs, des régénérations partielles peuvent survenir spontanément pour des températures de gaz d'échappement relativement faibles (-200°C).

Néanmoins, pour certains types de conduite, des problèmes liés à la contre-pression peuvent subsister de sorte qu'un apport extérieur d'énergie peut s'avérer nécessaire, comme par exemple le recours au chauffage électrique.

En ce qui concerne la consommation d'énergie, la plupart des systèmes connus utilisant le réchauffage électrique réalisent un chauffage global de l'élément filtrant. Ceci entraîne une forte consommation d'énergie, plus ou moins maîtrisée. Généralement la puissance électrique nécessaire pour déclencher une régénération totale du filtre est importante et souvent difficilement compatible avec les ressources électriques embarquées sur le véhicule. Le brevet EP-B1-0.485.179 illustre un système basé sur ce principe.

Par ailleurs, les conditions de la régénération peuvent être fortement dépendantes de l'état d'encrassement du filtre.

La demande de brevet français EN. 96/13855 déposée au nom de la demanderesse apporte une solution au problème de la consommation d'énergie d'un ensemble de filtration régénérable, quelles que soient les conditions de fonctionnement d'un moteur.

Selon ce document, on chauffe localement un élément de filtration en fonction d'une mesure globale de l'encrassement.

On connaît aussi la demande de brevet française EN 96/11292 selon laquelle on adapte la géométrie d'un moyen de filtration en fonction de stratégies prédéterminées liées au fonctionnement du moteur.

Dans le domaine de la mesure de l'encrassement dans des filtres à particules, des capteurs d'encrassement qui ont pour seule fonction de déterminer un degré d'encrassement des filtres sont connus.

La présente invention permet de pallier aux inconvénients qui viennent d'être cités et d'aller au-delà de la mesure de l'encrassement proprement dite.

Ainsi, la présente invention a pour objet un dispositif destiné à mesurer localement l'encrassement d'un milieu isolant et à le chauffer localement.

Selon l'invention, le dispositif comprend au moins un élément résistif chauffant, une gaine conductrice disposée autour de l'élément résistif, une zone isolante électriquement intercalée sur une longueur de l'élément résistif, plusieurs électrodes associées à la gaine conductrice et situées de part et d'autre de ladite zone isolante et un moyen de détection de l'encrassement par mesure de la variation de la résistance entre les électrodes, ladite résistance étant directement liée à l'encrassement dudit milieu.

En outre, le dispositif selon l'invention peut comprendre un moyen destiné à déclencher l'alimentation électrique de l'un au moins des éléments résistifs en fonction de la mesure de la résistance liée à l'encrassement du milieu isolant.

Ainsi, ledit moyen reçoit la ou les valeurs de résistance et réagit en déclenchant au moins un élément résistif chauffant.

Ledit moyen peut être un calculateur électronique, qui permet d'adapter de façon optimale le nombre de résistances activées en fonction de la mesure de l'encrassement détecté et/ou des ressources en énergie disponibles.

Le dispositif selon l'invention peut être utilisé dans un milieu filtrant, pour le régénérer localement.

Sans sortir du cadre de l'invention, le dispositif peut être utilisé dans une ligne d'échappement de moteurs à combustion interne, pour détecter le taux de particules contenues dans les gaz d'échappement.

Avantageusement, le dispositif selon l'invention peut être utilisé dans un milieu filtrant disposé dans la ligne d'échappement d'un moteur à combustion interne.

D'autres caractéristiques, détails, avantages liés à la présente invention apparaîtront plus clairement à la lecture de la description qui va suivre, faite à titre illustratif et nullement limitatif, en référence aux dessins annexés.
- La figure 1 est une coupe longitudinale simplifiée d'un milieu filtrant isolant:

- La figure 2 est un schéma de principe d'un mode de réalisation de l'invention,
- La figure 3 est un autre schéma d'ensemble d'un milieu filtrant isolant,
- La figure 4 concerne des mesures montrant la corrélation entre les valeurs de contre-pression et celles de résistances et leur évolution en fonction du temps.

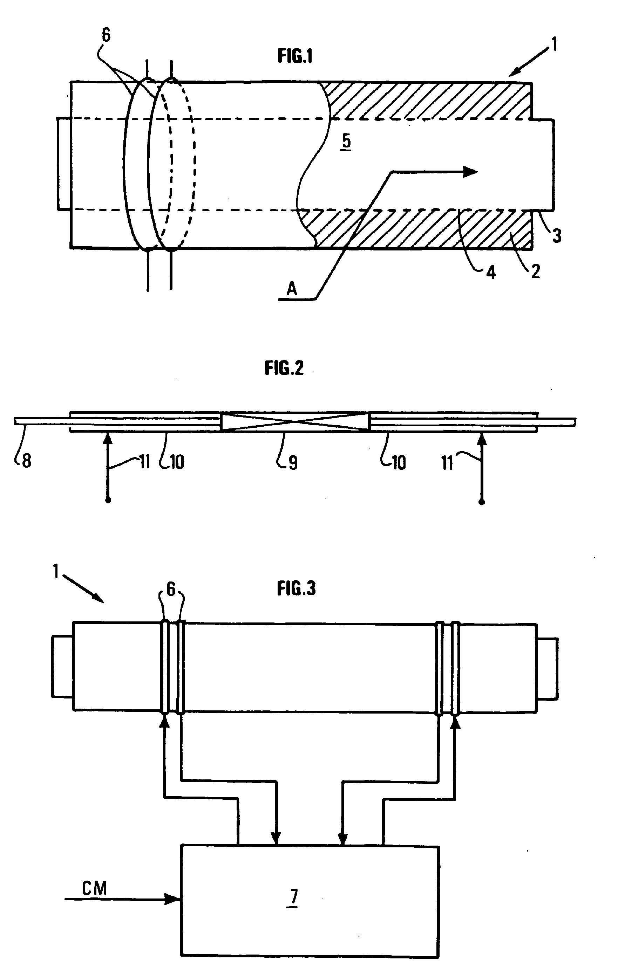

La figure 1 représente en coupe longitudinale une cartouche filtrante 1, connue en soi, équipée d'un dispositif de mesure de l'encrassement, non couvert par la présente invention.

La cartouche se présente ici sous forme d'un cylindre dont l'épaisseur est constituée d'un milieu 2 à la fois filtrant et isolant électriquement. Le milieu 2 est supporté dans sa partie centrale par un tube rigide métallique 3. Le tube 3 est percé d'un ensemble d'orifices 4 pour le passage des gaz.

Ces derniers s'écoulent selon la flèche A de la figure 1, c'est-à-dire qu'ils arrivent de l'extérieur de la cartouche, traversent radialement le milieu filtrant 2 puis les orifices 4 du tube 3 avant d'atteindre la zone centrale 5 de la cartouche 1.

Sur une telle cartouche, au moins un élément résistif chauffant 6 peut être disposé.

Selon la figure 1, deux éléments résistifs chauffants 6 sont enroulés autour de deux zones spécifiques de la cartouche.

Les éléments 6 sont alimentés séparément et sont reliés séparément à un ohmmètre afin de mesurer la résistance entre eux. En l'absence d'encrassement du milieu filtrant 2, la résistance électrique sera infinie puisque ledit milieu 2 est isolant.

Au fur et à mesure de l'encrassement c'est-à-dire de l'accumulation des particules entre les électrodes, le contact s'établit et progressivement, la résistance décroît permettant ainsi de suivre l'évolution de l'encrassement entre les deux éléments 6.

Les éléments 6 peuvent être constitués, d'une façon connue en soi, d'une âme métallique qui permet le dégagement de chaleur par effet Joule lors de la mise sous tension. Cette âme est recouverte d'un matériau isolant lui-même compris dans une enveloppe métallique externe.

Cette enveloppe métallique est ici utilisée comme une électrode du capteur de résistance.

Un seul élément 6 tel que décrit peut être enroulé autour de la cartouche 1, et une simple électrode métallique par exemple reliée au tube métallique 3 peut constituer la deuxième électrode du capteur d'encrassement.

La figure 2 concerne un mode de réalisation de l'invention. Ce dispositif comprend une âme métallique 8 filiforme qui constitue un élément résistif chauffant. Une zone isolante 9 est intercalée sur une certaine longueur de l'âme métallique 8. Une gaine externe conductrice 10 recouvre par ailleurs l'âme métallique 8. Des électrodes 11 sont implantées sur la gaine conductrice 10, à une certaine distance l'une de l'autre, de part et d'autre de la zone isolante 9.

Ce dispositif peut être mis en contact avec le milieu à contrôler, tel que la cartouche filtrante 1 évoquée plus haut. Il est à noter que la mise en oeuvre de l'invention ne nécessite pas que le milieu soit filtrant.

Ainsi, en absence d'encrassement, la résistance entre les deux bornes 11 est infinie vue la présence de la zone isolante 9.

Lorsqu'un dépôt de particules ayant une certaine conductivité se forme sur la zone isolante 9, la résistance mesurée aux bornes 11 diminue. Le principe de mesure énoncé relativement à la figure 1 s'applique ici de la même façon.

Un seuil donné de résistance peut permettre le déclenchement de l'alimentation de l'élément chauffant 8, en vue de régénérer le milieu encrassé.

Bien entendu, d'autres mesures de résistances peuvent être réalisées si d'autres éléments 6 et/ou électrodes sont implantés sur une cartouche.

Les éléments résistifs 6 permettent un chauffage local, d'une zone précise d'une cartouche, ce qui est très intéressant au plan de l'énergie nécessaire à la régénération de la cartouche.

Par ailleurs, comme le montre la figure 3 qui n'est pas représentative de la présente invention, un calculateur 7, ou tout autre moyen ayant la même fonction, est relié aux éléments résistifs 6. Il permet de déclencher sélectivement lesdits éléments résistifs en fonction des informations liées à l'encrassement local. Ainsi, il est possible d'affecter un seuil d'encrassement à chaque résistance mesurée localement, seuil qui déclenche au moins un élément résistif 6 donc la régénération d'une zone de la cartouche 1.

L'encrassement maximal, évalué localement, peut être caractérisé par un niveau de résistance seuil. En dessous de cette valeur, un élément chauffant correspondant à une zone considérée est mis sous tension. La puissance électrique nécessaire pour chauffer un tel élément jusqu'à la température de combustion des suies est très faible du fait de la localisation de la résistance chauffante. Il est alors possible d'adopter une stratégie de chauffage des autres éléments, de manière à propager la combustion initiée localement.

On peut aussi par exemple restreindre le chauffage aux zones qui restent encrassées à l'issue d'une régénération (régénération incomplète). Ces stratégies ne sont que des exemples possibles. Le principe général consiste à adapter le nombre de résistances alimentées à l'état d'encrassement du filtre, identifié à partir de la résistance locale du dépôt de particules et à partir des conditions de fonctionnement du moteur.

Conformément à l'invention, le calculateur 7 reçoit au moins une mesure de résistance et réagit en activant ou non un élément résistif associé ou bien tout autre élément résistif capable de chauffer localement le milieu isolant.

Diverses stratégies peuvent être mémorisées dans le calculateur 7 qui peut en outre prendre en compte d'autres paramètres liés par exemple aux conditions de fonctionnement du moteur, symbolisés par la flèche CM sur la figure 3.

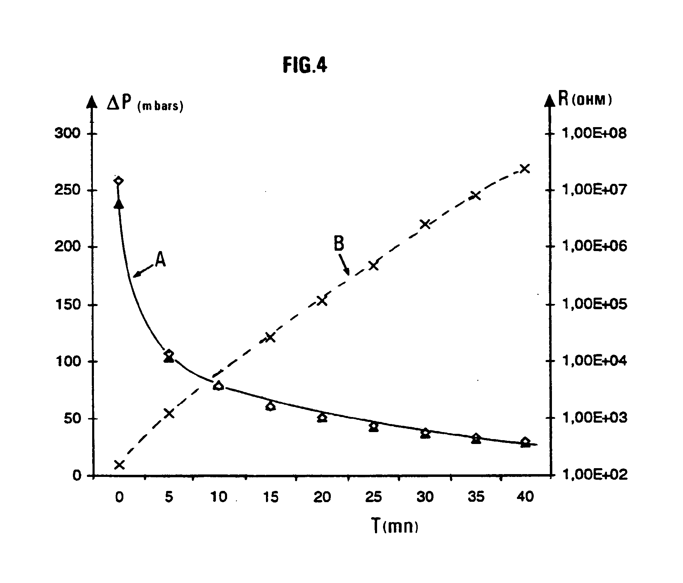

Comme l'indique la figure 4, les valeurs mesurées de la résistance (R) et de la contre-pression (ΔP) à l'échappement évoluent de façon inverse dans le temps : respectivement courbe A et courbe B.

Sachant que la contre-pression (ΔP) est une valeur significative de l'état d'encrassement du milieu isolant filtrant, on voit que la mesure de la résistance (R) selon l'invention, qui varie à l'inverse de la contre-pression (ΔP), est donc tout aussi significative de l'état d'encrassement.

De façon classique, la contre-pression à l'échappement (ΔP) (courbe B) croît dans le temps, à mesure que le milieu s'encrasse.

La figure 4 montre que la résistance (R) selon l'invention (courbe A) décroît d'abord fortement dans les dix premières minutes d'utilisation. Ensuite la décroissance est plus faible.

Le traitement des valeurs de résistance, comme indiqué plus haut à titre illustratif, peut donc permettre de gérer de façon très précise, à la fois dans le temps et dans l'espace, l'encrassement. Une économie en énergie en découle de façon évidente et avantageuse. Par ailleurs une meilleur maîtrise des contraintes thermiques est réalisée, ce qui améliore la durée de vie du système.

Sans sortir du cadre de la présente invention, les éléments résistifs 6 selon la figure 1 peuvent être implantés sur un milieu isolant placé dans un courant gazeux. La mesure de l'évolution dans le temps de l'encrassement du milieu isolant selon l'invention donne alors une indication du taux de particules moyen, sur la période considérée dans le courant gazeux. Un tel appareillage pourrait par exemple être utilisé pour contrôler les émissions de polluants d'un véhicule, selon un cycle de conduite normalisé, dans des stations de contrôle de l'état des véhicules.

Le mode de réalisation de l'invention selon la figure 2 permet la même utilisation, avec une mise en oeuvre très simple puisqu'il s'agit alors de placer in dispositif tel que représenté sur la figure 2, dans le courant gazeux. La variation du dépôt de particules, dans le temps, permet alors de détecter l'évolution du taux de particules dans le courant gazeux.

Ce mode de réalisation de l'invention peut aussi être utilisé pour détecter l'encrassement de différents milieux tels que des éléments de turbine, des cheminées industrielles... Un dispositif selon la figure 2 est alors disposé sur le milieu à contrôler et relié à un moyen de contrôle tel qu'un calculateur électronique 7.

En outre, la présente invention peut être utilisée dans l'un ou l'autre des ensembles de filtration décrits dans les demandes françaises EN 96/11292 ou EN 96/13855 déposées au nom de la demanderesse.

## Revendications

1. Dispositif destiné à mesurer l'encrassement et à chauffer localement un milieu isolant électriquement, **caractérisé en ce qu'**il comprend au moins un élément résistif chauffant (8), une gaine conductrice (10) disposée autour de l'élément résistif (8), une zone isolante (9) intercalée sur une longueur de l'élément résistif (8), plusieurs électrodes (11) associées à la gaine conductrice et situées de part et d'autre de ladite zone isolante (9) et un moyen de détection de l'encrassement par mesure de la variation de la résistance entre les électrodes, ladite résistance étant directement liée à l'encrassement dudit milieu.

2. Dispositif selon la revendication 1, **caractérisé en ce qu'**il comprend en outre un moyen (7) destiné à déclencher l'alimentation électrique de l'un au moins des éléments résistifs (8) en fonction de la mesure de la résistance liée à l'encrassement du milieu isolant.

3. Dispositif selon la revendication 2, **caractérisé en ce que** ledit moyen (7) reçoit la ou les valeurs de résistance et réagit en déclenchant au moins un élément résistif chauffant.

4. Dispositif selon l'une quelconque des revendications précédentes, **caractérisé en ce que** ledit moyen (7) est un calculateur électronique.

5. Dispositif selon la revendication 4, **caractérisé en ce que** ledit calculateur (7) permet d'adapter de façon optimale le nombre de résistances activées en fonction de la mesure de l'encrassement détecté.

6. Utilisation du dispositif selon l'une quelconque des revendications précédentes dans un milieu filtrant, pour le régénérer localement.

7. Utilisation du dispositif selon l'une quelconque des revendications 1 à 5, dans une ligne d'échappement de moteurs à combustion interne, pour détecter le taux de particules contenues dans les gaz d'échappement.

8. Utilisation du dispositif selon l'une quelconque des revendications 1 à 5 dans un milieu filtrant disposé dans une ligne d'échappement d'un moteur à combustion interne.

## Claims

1. A device for measuring fouling and for locally heating an electrically insulating medium, **characterised in that** it includes at least one heating resistive element (8), a conductive sheath (10) arranged around the resistive element (8), an insulating area (9) sandwiched along a length of the resistive element (8), a plurality of electrodes (11) associated with the conductive sheath and located on either side of said insulating area (9) and means for detecting fouling through measuring the variation of the resistance between the electrodes, said resistance being directly linked to the fouling of said medium.

2. The device according to Claim 1, **characterised in that** it further includes means (7) for triggering the electrical supply of at least one of the heating resistive elements according to the measurement of the resistance linked to the fouling of the insulating medium.

3. The device according to Claim 2, **characterised in that** said means (7) receives the resistance value(s) and reacts by triggering at least one heating resistive element.

4. The device according to any one of the preceding claims, **characterised in that** said means (7) is an electronic calculator.

5. The device according to Claim 4, **characterised in that** said calculator (7) makes it possible to optimally adapt the number of actuated resistors according to the measurement of sensed fouling.

6. Use of the device according to any one of the preceding claims in a filtering medium in order to regenerate it locally.

7. Use of the device according to any one of Claims 1 to 5, in an exhaust line of internal combustion engines, to detect the proportion of particles contained in the exhaust gases.

8. Use of the device according to any one of Claims 1 to 5 in a filtering medium arranged in an exhaust line of an internal combustion engine.

## Patentansprüche

1. Vorrichtung zur Messung der Verschmutzung eines elektrisch isolierenden Mediums und zu seiner lokalen Beheizung, **dadurch gekennzeichnet, dass** sie umfasst mindestens ein Widerstandsheizelement (8), eine um das Widerstandsheizelement (8) angeordnete Auskleidung (10), eine Isolierzone (9), die auf einer Länge des Widerstandsheizelements (8) dazwischen liegen, mehrere Elektroden (11), die zur Auskleidung gehören und beiderseits der Isolierzone (9) angeordnet sind, und ein Mittel zur Erkennung der Verunreinigung durch Messen der Änderung des Widerstands zwischen den Elektroden, wobei dieser Widerstand direkt mit der Verschmutzung dieses Mediums verbunden ist.

2. Vorrichtung nach Anspruch 1, **dadurch gekennzeichnet, dass** sie außerdem ein Mittel (7) umfasst, das dazu bestimmt ist, die Stromversorgung des mindestens einen Widerstandsheizelements (8) abhängig von der Messung des mit der Verschmutzung des isolierenden Mediums verbundenen Widerstands auszulösen.

3. Vorrichtung nach Anspruch 2, **dadurch gekennzeichnet, dass** dieses Mittel (7) den oder die Widerstandswert(e) empfängt und reagiert, indem es mindestens ein Widerstandsheizelement auslöst.

4. Vorrichtung nach einem der vorherigen Ansprüche, **dadurch gekennzeichnet, dass** das Mittel (7) ein elektronischer Rechner ist.

5. Vorrichtung nach Anspruch 4, **dadurch gekennzeichnet, dass** dieser Rechner (7) es erlaubt, die Zahl der aktivierten Widerstände abhängig von der Messung der erkannten Verschmutzung auf optimale Weise anzupassen.

6. Anwendung der Vorrichtung nach einem der vorherigen Ansprüche in einem Filtermedium, um es lokal zu regenerieren.

7. Anwendung der Vorrichtung nach einem der Ansprüche 1 bis 5 in einer Auspuffleitung von Verbrennungsmotoren, um den in den Abgasen enthaltenen Partikelgehalt zu erkennen.

8. Anwendung der Vorrichtung nach einem der Ansprüche 1 bis 5 in einem Filtermedium, das in einer Auspuffleitung eines Verbrennungsmotors angeordnet ist.
